# EUROPÄISCHE PATENTSCHRIFT

(11) **EP 4 063 076 B1**
(45) Veröffentlichungstag und Bekanntmachung des Hinweises auf die Patenterteilung: **08.04.2026**
(21) Anmeldenummer: 22155719.2
(22) Anmeldetag: 08.02.2022
(51) Int. Cl.: B25D 17/08, B23B 31/107

(54) **HANDWERKZEUGMASCHINE MIT EINER VERRIEGELUNGSEINRICHTUNG**
HANDHELD MACHINE TOOL WITH LOCKING DEVICE
MACHINE-OUTIL À MAIN DOTÉE D'UN DISPOSITIF DE VERROUILLAGE

(30) Priorität: 26.03.2021 DE 102021203064
(43) Veröffentlichungstag der Anmeldung: 28.09.2022
(73) Patentinhaber: Robert Bosch GmbH, 70442 Stuttgart (DE)
(72) Erfinder: Werner, Immanuel, 72574 Bad Urach (DE)

(56) Entgegenhaltungen:
- EP-A1- 2 894 009
- DE-A1- 19 521 993
- DE-A1- 3 516 541
- US-A1- 2013 206 436

## Beschreibung

### Stand der Technik

Die vorliegende Erfindung betrifft eine Handwerkzeugmaschine mit einer Werkzeugaufnahme, die einen rohrförmigen Werkzeughalter aufweist, in dem ein Einsatzwerkzeug durch eine zugeordnete Verriegelungseinrichtung über mindestens ein Verriegelungselement verriegelbar ist, wobei die Verriegelungseinrichtung eine über ein zugeordnetes Federelement federbeaufschlagte Druckhülse sowie eine Anschlaghülse aufweist, wobei der rohrförmige Werkzeughalter mindestens eine Ausnehmung aufweist, in der das mindestens eine Verriegelungselement in einer Verriegelungsstellung zumindest abschnittsweise angeordnet ist und wobei die federbeaufschlagte Druckhülse das mindestens eine Verriegelungselement in der Verriegelungsstellung gegen die Anschlaghülse sowie in die Ausnehmung des Werkzeughalters beaufschlagt.

Aus der EP 2 894 009 A1 ist eine Handwerkzeugmaschine bekannt, die eine Verriegelungseinrichtung zur Verriegelung eines Einsatzwerkzeugs in einem rohrförmigen Werkzeughalter aufweist. Die Verriegelungseinrichtung weist Verriegelungselemente auf, die in einer zugeordneten Verriegelungsstellung von einer federbeaufschlagten Druckhülse gegen eine Anlagefläche einer Anschlaghülse beaufschlagt werden. Die Verriegelungselemente sind beispielhaft als Klinken ausgeführt, die in der zugeordneten Verriegelungsstellung zumindest abschnittsweise in zugeordneten Ausnehmungen des rohrförmigen Werkzeughalters angeordnet sind.

Des Weiteren ist aus der DE 195 21 993 A1 eine Handwerkzeugmaschine bekannt, die eine Verriegelungseinrichtung zur Verriegelung eines Einsatzwerkzeugs in einem rohrförmigen Werkzeughalter aufweist. Die Verriegelungseinrichtung weist Verriegelungselemente auf, die in einer zugeordneten Verriegelungsstellung von einer federbeaufschlagten Verriegelungshülse gegen eine Anlagefläche einer Antriebsspindel beaufschlagt werden. Die Verriegelungselemente weisen zwei kugelförmige Enden auf, die mittels eines Stegs miteinander verbunden sind. Ein der Verriegelungshülse zugewandt angeordnetes, kugelförmiges Ende ist in einer Tasche der Verriegelungshülse angeordnet.

### Offenbarung der Erfindung

Die Erfindung betrifft eine Handwerkzeugmaschine mit einer Werkzeugaufnahme, die einen rohrförmigen Werkzeughalter aufweist, in dem ein Einsatzwerkzeug durch eine zugeordnete Verriegelungseinrichtung über mindestens ein Verriegelungselement verriegelbar ist, wobei die Verriegelungseinrichtung eine über ein zugeordnetes Federelement federbeaufschlagte Druckhülse sowie eine Anschlaghülse aufweist. Der rohrförmige Werkzeughalter weist mindestens eine Ausnehmung auf, in der das mindestens eine Verriegelungselement in einer Verriegelungsstellung zumindest abschnittsweise angeordnet ist, und wobei die federbeaufschlagte Druckhülse das mindestens eine Verriegelungselement in der Verriegelungsstellung gegen die Anschlaghülse sowie in die Ausnehmung des Werkzeughalters beaufschlagt. Die Anschlaghülse weist an ihrem Innenumfang mindestens eine Anlagefläche auf, die an eine Außenkontur des mindestens einen Verriegelungselements angepasst ist, um einen Flächenkontakt zwischen der mindestens einen Anlagefläche und dem mindestens einen Verriegelungselement in der Verriegelungsstellung zu ermöglichen, wobei das mindestens eine Verriegelungselement als Verriegelungskugel ausgebildet ist, und wobei die mindestens eine Anlagefläche zumindest abschnittsweise sphärisch ausgebildet ist.

Durch die Anpassung der Anlagefläche der Anschlaghülse an die Außenkontur des mindestens einen Verriegelungselements und das Ausbilden eines Flächenkontakts zwischen der Anlagefläche und dem mindestens einen Verriegelungselement in der Verriegelungsstellung kann die Widerstandsfähigkeit der Anschlaghülse gegen auftretenden Verschleiß signifikant vergrößert werden. Hierdurch kann eine entsprechende Lebensdauer der Anschlaghülse, und somit der Werkzeugaufnahme insgesamt, aufgrund einer resultierenden Verschleißminderung vorteilhafterweise verlängert werden. Darüber hinaus ermöglicht die Vergrößerung der Widerstandsfähigkeit der Anschlaghülse gegen auftretenden Verschleiß auch eine Verwendung der Werkzeugaufnahme in vergleichsweise leistungsstarken Handwerkzeugmaschinen, deren Leistungsstärke diejenige von gebräuchlichen Handwerkzeugmaschinen überschreiten kann. Des Weiteren kann, unabhängig von einer entsprechenden Ausgestaltung der federbeaufschlagten Druckhülse, zumindest die Anschlaghülse verschleißmindernd ausgebildet werden.

Gemäß einer Ausführungsform weist die federbeaufschlagte Druckhülse mindestens eine Aufnahme auf, in der das mindestens eine Verriegelungselement aufgenommen ist, wobei der mindestens einen Aufnahme eine Druckfläche zur Kraftbeaufschlagung des mindestens einen Verriegelungselements in der Verriegelungsstellung zugeordnet ist, und wobei die Druckfläche an die Außenkontur des mindestens einen Verriegelungselements angepasst ist, um einen Flächenkontakt zwischen der Druckfläche und dem mindestens einen Verriegelungselement in der Verriegelungsstellung zu ermöglichen.

Durch die Anpassung der Druckfläche der federbeaufschlagten Druckhülse an die Außenkontur des mindestens einen Verriegelungselements und das Ausbilden eines Flächenkontakts zwischen der Druckfläche und dem mindestens einen Verriegelungselement in der Verriegelungsstellung kann auch die Widerstandsfähigkeit der federbeaufschlagten Druckhülse gegen auftretenden Verschleiß signifikant vergrößert werden. Hierdurch kann wiederum eine entsprechende Lebensdauer der federbeaufschlagten Druckhülse, und somit der Werkzeugaufnahme insgesamt, aufgrund einer resultierenden Verschleißminderung vorteilhafterweise verlängert werden. Darüber hinaus ermöglicht die Vergrößerung der Widerstandsfähigkeit der federbeaufschlagten Druckhülse gegen auftretenden Verschleiß ebenfalls eine Verwendung der Werkzeugaufnahme in vergleichsweise leistungsstarken Handwerkzeugmaschinen, deren Leistungsstärke diejenige von gebräuchlichen Handwerkzeugmaschinen überschreiten kann.

Bevorzugt ist die Druckfläche zumindest abschnittsweise sphärisch ausgebildet.

Somit kann ein sicheres und zuverlässiges Verriegelungselement bereitgestellt werden, dass eine einfache und unkomplizierte Ausgestaltung der Druckfläche ermöglicht.

Vorzugsweise ist die mindestens eine Aufnahme der federbeaufschlagten Druckhülse dazu ausgebildet, eine spielbehaftete Aufnahme des mindestens einen Verriegelungselements zu ermöglichen.

Durch die spielbehaftete Aufnahme des mindestens einen Verriegelungselements in der Aufnahme der federbeaufschlagten Druckhülse kann sich das mindestens eine Verriegelungselement innerhalb vorgegebener Toleranzen ungehemmt in der Aufnahme bewegen. Somit können die für eine Verschiebung der federbeaufschlagten Druckhülse erforderlichen Kräfte vorteilhafterweise reduziert werden.

Gemäß einer Ausführungsform ist die federbeaufschlagte Druckhülse gegen eine Federkraft des zugeordneten Federelements in Längsrichtung des rohrförmigen Werkzeughalters verschiebbar, um das mindestens eine Verriegelungselement von der Verriegelungsstellung in die Entriegelungsstellung zu verschieben.

Hierdurch ist vorteilhafterweise lediglich ein Verschieben der federbeaufschlagten Druckhülse erforderlich, um das mindestens eine Verriegelungselement von der Verriegelungsstellung in die Entriegelungsstellung zu verschieben. Dies kann vorteilhafterweise durch ein Verschieben der federbeaufschlagten Druckhülse mittels einer zugeordneten Verriegelungshülse erfolgen.

Bevorzugt ist eine Verriegelungshülse vorgesehen, die zur Verschiebung der federbeaufschlagten Druckhülse gegen die Federkraft des zugeordneten Federelements in Längsrichtung des rohrförmigen Werkzeughalters verschiebbar ist.

Somit kann ein einfacher und unkomplizierter Entriegelungsvorgang mittels einer Verschiebung der Verriegelungshülse ermöglicht werden.

Bevorzugt weist die Verriegelungshülse einen Beaufschlagungsabschnitt auf, der bei einer Verschiebung der Verriegelungshülse in Längsrichtung gegen die federbeaufschlagte Druckhülse die federbeaufschlagte Druckhülse gegen die Federkraft des zugeordneten Federelements verschiebt.

Somit kann auf einfache Art und Weise durch ein Verschieben der Verriegelungshülse ein Entriegelungsvorgang ausgeführt werden.

Gemäß einer Ausführungsform weist die Verriegelungshülse einen nutförmigen Griffbereich auf.

Durch die nutförmige Ausgestaltung des Griffbereichs wird vorteilhafterweise eine vergleichsweise schlanke Ausbildung der Verriegelungshülse ermöglicht, wodurch eine ungewünschte Betätigung der Verriegelungshülse im Arbeitsbetrieb wirksam verhindert werden kann. Hierdurch kann auch eine unkontrollierte Entriegelung eines in der Werkzeugaufnahme der Handwerkzeugmaschine im Arbeitsbetrieb verriegelten Einsatzwerkzeugs vermieden werden.

Gemäß einer Ausführungsform ist die Handwerkzeugmaschine nach Art eines Bohr- oder Meißelhammers ausgebildet, wobei der rohrförmige Werkzeughalter ein Hammerrohr aufweist.

Somit kann leicht und unkompliziert eine geeignete Handwerkzeugmaschine bereitgestellt werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht einer Handwerkzeugmaschine mit einer erfindungsgemäßen Werkzeugaufnahme,
- Fig. 2: einen Längsschnitt durch die Werkzeugaufnahme von Fig. 1 im Verriegelungszustand,
- Fig. 3: eine perspektivische Ansicht einer Anschlaghülse der Werkzeugaufnahme von Fig. 2,
- Fig. 4: eine Schnittansicht der Anschlaghülse von Fig. 3,
- Fig. 5: eine perspektivische Ansicht einer Druckhülse der Werkzeugaufnahme von Fig. 2, und
- Fig. 6: eine Schnittansicht der Druckhülse von Fig. 5.

### Beschreibung der Ausführungsbeispiele

In den Figuren werden Elemente mit gleicher oder vergleichbarer Funktion mit identischen Bezugszeichen versehen und nur einmal genauer beschrieben.

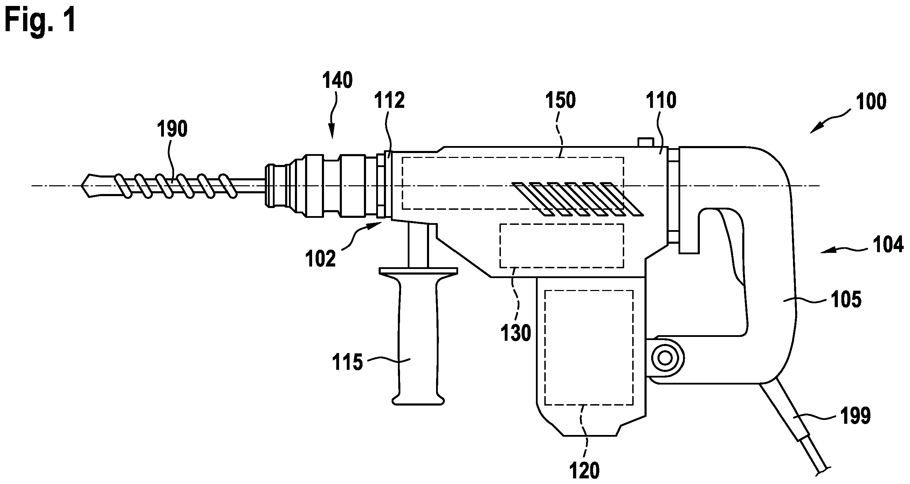

Fig. 1 zeigt eine beispielhafte Handwerkzeugmaschine 100 mit einem Gehäuse 110, in dem illustrativ eine Antriebseinheit 120 zum Antrieb einer Werkzeugaufnahme 140 angeordnet ist. Die Werkzeugaufnahme 140 ist bevorzugt zur Aufnahme eines Einsatzwerkzeugs 190 ausgebildet. Vorzugsweise ist die Werkzeugaufnahme 140 eine 22mm HEX-Werkzeugaufnahme, kann jedoch auch als SDSmax- oder SDSplus-Werkzeugaufnahme, oder als eine beliebig andere geeignete Werkzeugaufnahme, ausgebildet sein.

Optional ist der Antriebseinheit 120 ein Getriebe 130 zugeordnet. Jedoch kann die Handwerkzeugmaschine 100 auch ohne das Getriebe 130 ausgebildet sein.

Des Weiteren weist die Handwerkzeugmaschine 100 bevorzugt ein Schlagwerk 150 zur Erzeugung von Schlagimpulsen in einem Schlagbetrieb der Handwerkzeugmaschine 100 auf. Die Erzeugung von Schlagimpulsen mittels des Schlagwerks 150 ist dem Fachmann hinlänglich bekannt. Auch ist ein geeignetes Schlagwerk, mit dem das Schlagwerk 150 realisiert werden kann, dem Fachmann hinreichend bekannt, sodass hier zwecks Einfachheit und Knappheit der Beschreibung auf eine eingehende Beschreibung des Schlagwerks 150 sowie der Funktionalität des Schlagwerks 150 verzichtet wird.

Illustrativ weist das Gehäuse 110 an seiner von der Werkzeugaufnahme 140 abgewandten Seite 104 einen Handgriff 105 auf und an seiner der Werkzeugaufnahme 140 zugewandten Seite 102 einen optionalen Zusatzhandgriff 115. Bevorzugt ist das Gehäuse 110 an seiner Seite 102 mit einem Abschlussflansch 112 versehen.

Darüber hinaus ist die Handwerkzeugmaschine 100 beispielhaft netzgebunden betreibbar, d.h. über ein Stromkabel 199 mit einem Stromnetz verbindbar. Allerdings kann die Handwerkzeugmaschine 100 stattdessen auch kabellos, z.B. über ein Akkupack, betrieben werden.

Bevorzugt ist die Handwerkzeugmaschine 100 nach Art eines Bohr- oder Meißelhammers ausgebildet. Eine derartige Handwerkzeugmaschine 100 ist aus dem Stand der Technik hinreichend bekannt, weshalb hier zwecks Knappheit der Beschreibung auf eine ausführliche Beschreibung verzichtet wird.

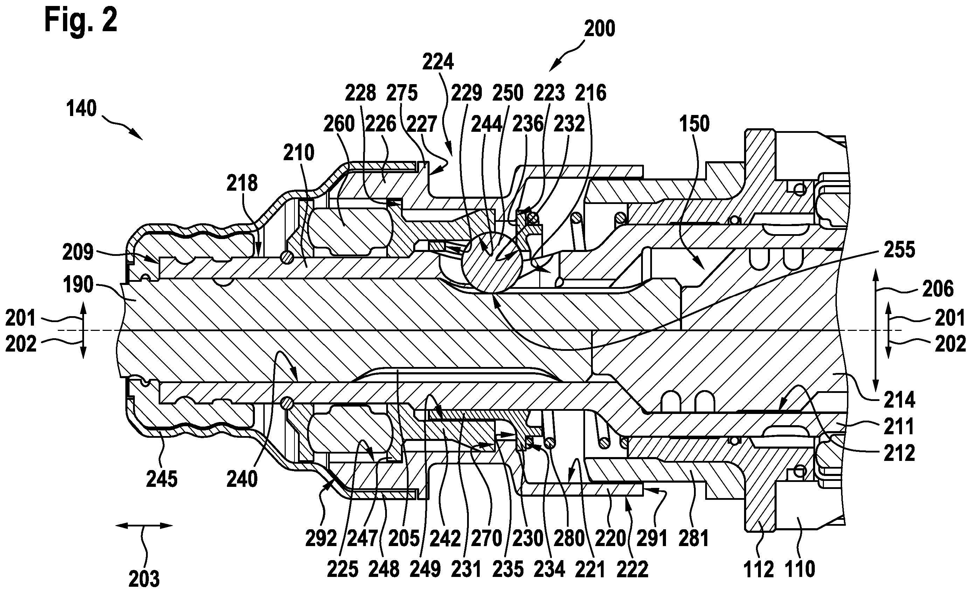

Fig. 2 zeigt die Werkzeugaufnahme 140 von Fig. 1, sowie einen Ausschnitt des mit dem Abschlussflansch 112 versehenen Gehäuses 110 der Handwerkzeugmaschine 100 von Fig. 1. Die Werkzeugaufnahme 140 weist eine Verriegelungseinrichtung 200 auf, mittels der das beispielhafte Einsatzwerkzeug 190 von Fig. 1 in der Werkzeugaufnahme 140 verriegelt ist. Beispielhaft ist die Verriegelungseinrichtung 200 in einem Verriegelungszustand gezeigt. Die Werkzeugaufnahme 140, und somit auch die Verriegelungseinrichtung 200, hat illustrativ eine Längserstreckung 203, die eine axiale Richtung bzw. Längsrichtung definiert, sowie eine Quererstreckung 206, die eine radiale Richtung definiert.

Die Werkzeugaufnahme 140 weist einen rohrförmigen Werkzeughalter 210 auf, der mindestens eine Ausnehmung 216 aufweist. Vorzugsweise weist der Werkzeughalter 210 ein Hammerrohr 211 auf und ist bevorzugt einstückig mit diesem ausgebildet.

Illustrativ bildet der Werkzeughalter 210 eine Innenaufnahme 240 zur Aufnahme des Einsatzwerkzeugs 190 aus. Das Hammerrohr 211 bildet beispielhaft eine Innenaufnahme 212 aus, in der vorzugsweise zumindest ein dem Schlagwerk 150 von Fig. 1 zugeordneter Schläger 214 angeordnet ist.

Die Werkzeugaufnahme 140 ist in einer oberen Bildhälfte, gesehen in Richtung von Pfeilen 201, beispielhaft vor einem Übertragen eines Schlagimpulses vom Schläger 214 auf das Einsatzwerkzeug 190 gezeigt. In der unteren Bildhälfte, gesehen in Richtung von Pfeilen 202, ist die Werkzeugaufnahme 140 beispielhaft im Schlagbetrieb beim Übertragen eines Schlagimpulses vom Schläger 214 auf das Einsatzwerkzeug 190 gezeigt.

Das Einsatzwerkzeug 190 weist illustrativ einen dem Schläger 214 zugewandten Verriegelungsabschnitt 205 auf, über den das Einsatzwerkzeug 190 durch die Verriegelungseinrichtung 200 im Werkzeughalter 210, und somit in der Werkzeugaufnahme 140, verriegelt ist. Erfindungsgemäß ist der Verriegelungseinrichtung 200 mindestens ein Verriegelungselement 250 zugeordnet, das in der mindestens einen Ausnehmung 216 des Werkzeughalters 210 zum Verriegeln des Einsatzwerkzeugs 190 angeordnet ist.

Bevorzugt sind zwei oder drei Verriegelungselemente 250 vorgesehen, wobei jedes Verriegelungselement jeweils in eine zugeordnete Ausnehmung des Werkzeughalters 210 eingreift. Jedoch können auch mehr als drei Verriegelungselemente 250 vorhanden sein. Erfindungsgemäß ist das Verriegelungselement 250 als Verriegelungskugel ausgebildet.

Es sei an dieser Stelle darauf hingewiesen, dass die in Fig. 2 dargestellte, beispielhafte Realisierung von einer Verwendung von drei Verriegelungskugeln ausgeht. Diese sind bevorzugt jeweils in einem Winkelabstand von 120° relativ zueinander angeordnet. Deshalb ist in Fig. 2 in der unteren Bildhälfte, gesehen in Richtung der Pfeile 202, auch keine Verriegelungskugel vorhanden, da die untere Bildhälfte in einem Versatz von 180° zur oberen Bildhälfte, gesehen in Richtung der Pfeile 201, angeordnet ist, in der eine Verriegelungskugel der Verriegelungseinrichtung 200 gezeigt ist.

Erfindungsgemäß weist die Verriegelungseinrichtung 200 eine über ein zugeordnetes Federelement 280 federbeaufschlagte Druckhülse 230 sowie eine Anschlaghülse 242 auf. Die Anschlaghülse 242 weist an ihrem Innenumfang 249 mindestens eine Anlagefläche 244 auf. Die mindestens eine Anlagefläche 244 ist an eine Außenkontur 255 des mindestens einen Verriegelungselements 250 angepasst, um einen Flächenkontakt zwischen der mindestens einen Anlagefläche 244 und dem mindestens einen Verriegelungselement 250 in der Verriegelungsstellung zu ermöglichen. Vorzugsweise ist jedem Verriegelungselement jeweils eine Anlagefläche zugeordnet.

Die federbeaufschlagte Druckhülse 230 weist bevorzugt einen Beaufschlagungskragen 236 auf, gegen den das zugeordnete Federelement 280 anliegt, um die federbeaufschlagte Druckhülse 230 wie gezeigt in eine Verriegelungsposition zu beaufschlagen. Illustrativ hat der Beaufschlagungskragen 236 eine Anstehkante 234, gegen die das zugeordnete Federelement 280 anliegt.

Es wird darauf hingewiesen, dass im Kontext der vorliegenden Erfindung der Begriff "Hülse" dahingehend zu verstehen ist, dass er jeglichen runden, bevorzugt länglichen, innen hohlen Gegenstand umfasst, in den man etwas einstecken kann. Dementsprechend umschließt der Begriff der "Hülse" im Kontext der vorliegenden Erfindung auch einen breiten Ring, oder eine Mehrzahl von miteinander verbundenen Stegen, die sich z.B. auf einem Zylindermantel erstrecken und deren Umhüllende ringförmig ist, usw.

Erfindungsgemäß beaufschlagt die federbeaufschlagte Druckhülse 230 das mindestens eine Verriegelungselement 250 in der Verriegelungsstellung gegen die mindestens eine Anlagefläche 244 der Anschlaghülse 242. Hierzu hat die federbeaufschlagte Druckhülse 230 vorzugsweise mindestens eine Druckfläche 232 zur Kraftbeaufschlagung des mindestens einen Verriegelungselements 250 in der Verriegelungsstellung. Bevorzugt ist jedem Verriegelungselement jeweils eine Druckfläche zugeordnet. Die Druckfläche 232 ist dabei vorzugsweise dem Verriegelungselement 250 zugewandt angeordnet. Bevorzugt ist die federbeaufschlagte Druckhülse 230 gegen eine Federkraft des zugeordneten Federelements 280 in die Längsrichtung 203 des Werkzeughalters 210 verschiebbar, um das mindestens eine Verriegelungselement 250 von der Verriegelungsstellung in die Entriegelungsstellung zu verschieben.

Illustrativ hat die federbeaufschlagte Druckhülse 230 darüber hinaus mindestens eine Aufnahme 229, bzw. bevorzugt jeweils eine Aufnahme pro Verriegelungselement. Der mindestens einen Aufnahme 229 ist vorzugsweise die mindestens eine Druckfläche 232 zur Kraftbeaufschlagung des mindestens einen Verriegelungselements 250 in der Verriegelungsstellung zugeordnet. Bevorzugt ist auch die Druckfläche 232 an die Außenkontur 255 des mindestens einen Verriegelungselements 250 angepasst, um einen Flächenkontakt zwischen der Druckfläche 232 und dem mindestens einen Verriegelungselement 250 in der Verriegelungsstellung zu ermöglichen.

Die mindestens eine Aufnahme 229 ist beispielhaft in einem hülsenförmigen Körper 231 der federbeaufschlagten Druckhülse 230 ausgebildet. Der hülsenförmige Körper 231 ist bevorzugt auf einem Außenumfang 218 des Werkzeughalters 210 axial verschiebbar geführt.

In der mindestens einen Aufnahme 229 ist das mindestens eine Verriegelungselement 250 vorzugsweise spielbehaftet aufgenommen, d.h. derart, dass das mindestens eine Verriegelungselement 250 sich innerhalb vorgegebener Toleranzen in der Aufnahme 229 ungehemmt bewegen kann. Das mindestens eine Verriegelungselement 250 greift über die Ausnehmung 216 des Werkzeughalters 210 zumindest bereichsweise in den Verriegelungsabschnitt 205 des Einsatzwerkzeugs 190 ein und verriegelt dieses somit im Werkzeughalter 210, bzw. in der Werkzeugaufnahme 140.

Darüber hinaus weist die Verriegelungseinrichtung 200 bevorzugt eine Verriegelungshülse 220 auf, die in der Längsrichtung 203 des Werkzeughalters 210 verschiebbar ist, um die federbeaufschlagte Druckhülse 230 von ihrer Verriegelungsposition in eine Entriegelungsposition zu verschieben. Diese Verschiebung erfolgt gegen die Federkraft des Federelements 280. Alternativ hierzu können die Verriegelungshülse 220 und die federbeaufschlagte Druckhülse 230 auch einstückig ausgeführt sein, oder zumindest der hülsenförmige Körper 231 der federbeaufschlagten Druckhülse 230 kann als integraler Bestandteil der Verriegelungshülse 220 ausgebildet sein.

Vorzugsweise ist die Verriegelungshülse 220 mit einem nutförmigen Griffbereich 224 versehen. Dieser nutförmige Griffbereich 224 bildet illustrativ eine ringförmige Griffmulde 227 aus. Hierbei hat die ringförmige Griffmulde 227 in die Längsrichtung 203 gesehen bevorzugt einen kreisförmigen Querschnitt, kann aber alternativ hierzu auch einen beliebig anderen Querschnitt aufweisen, z.B. einen polygonalen.

Die Verriegelungshülse 220 kann ein erstes Material aufweisen und die federbeaufschlagte Druckhülse 230 kann ein zweites Material aufweisen. Das erste Material ist vorzugsweise Kunststoff, insbesondere ein formstabiler Kunststoff, z.B. Hartplastik. Des Weiteren kann der Kunststoff als faserverstärkter Kunststoff, insbesondere faserverstärkter und/oder kohlefaserverstärkter Kunststoff, z.B. Polyamid mit Glasfaser, ausgebildet sein. Das zweite Material ist bevorzugt ein metallischer Werkstoff, vorzugsweise Stahl. Insbesondere ist das zweite Material bevorzugt ein härtbarer Werkstoff, z.B. Metall, Sinterwerkstoff.

Illustrativ hat die Verriegelungshülse 220 ein erstes, dem Abschlussflansch 112 zugewandtes, axiales Ende 291 und ein gegenüberliegendes, zweites axiales Ende 292. Im Bereich des ersten axialen Endes 291 weist die Verriegelungshülse 220 bevorzugt einen Führungsabschnitt 222 auf. Im Bereich des zweiten axialen Endes 292 weist die Verriegelungshülse 220 bevorzugt einen Eingriffsabschnitt 226 auf. Zwischen dem Eingriffsabschnitt 226 und dem Führungsabschnitt 222 ist in der Längsrichtung 203 des Werkzeughalters 210 vorzugsweise der nutförmige Griffbereich 224 angeordnet.

Der Führungsabschnitt 222 bildet bevorzugt eine Innenaufnahme 221 aus, in der der Beaufschlagungskragen 236 der federbeaufschlagten Druckhülse 230 und das Federelement 280 zumindest teilweise angeordnet sind. Hierbei weist der Führungsabschnitt 222 vorzugsweise eine dem nutförmigen Griffbereich 224 zugewandte Abschlusswand 223 auf, die einen Beaufschlagungsabschnitt ausbildet, gegen den das Federelement 280 illustrativ den Beaufschlagungskragen 236 in der Verriegelungsstellung des mindestens einen Verriegelungselements 250 federbeaufschlagt. Beispielhaft wird eine Anstehkante 235 des Beaufschlagungskragens 236 gegen die Abschlusswand 223, bzw. den Beaufschlagungsabschnitt 223, federbeaufschlagt.

Illustrativ dient der Führungsabschnitt 222 zum Führen der Verriegelungshülse 220 auf einer Führungshülse 281. Diese ist bevorzugt am Abschlussflansch 112 des Gehäuses 110 befestigt.

Der Eingriffsabschnitt 226 bildet bevorzugt eine Innenaufnahme 225 aus, in der im Verriegelungszustand der Verriegelungseinrichtung 200, wie in Fig. 2 gezeigt, vorzugsweise ein Dämpfungselement 260 angeordnet ist. Das Dämpfungselement 260 ist illustrativ ringförmig und auf dem Außenumfang 218 des Werkzeughalters 210 angeordnet. Darüber hinaus liegt das Dämpfungselement 260 bevorzugt in der Längsrichtung 203 des Werkzeughalters 210 gegen die Anschlaghülse 242 an, gegen die ebenfalls ein erster Innenkragen 228 der Verriegelungshülse 220 anliegt. Illustrativ liegt der erste Innenkragen 228 gegen einen Außenkragen 247 der Anschlaghülse 242 an. Ein zweiter Innenkragen 270 der Verriegelungshülse 220, der beispielhaft von dem Beaufschlagungsabschnitt 223 der Verriegelungshülse 220 gebildet wird, liegt ebenfalls gegen die Anschlaghülse 242 an.

Illustrativ ist dem Eingriffsabschnitt 226 ein Außenkragen 275 zugeordnet. Der Außenkragen 275 bildet vorzugsweise einen Übergang vom Eingriffsabschnitt 226 zum nutförmigen Griffbereich 224.

Bevorzugt greift der Eingriffsabschnitt 226 im Verriegelungszustand der Verriegelungseinrichtung 200 in eine Schutzkappe 245 ein. Die Schutzkappe 245 ist vorzugsweise an einem freien Ende 209 des Werkzeughalters 210 angeordnet.

Illustrativ ist die Schutzkappe 245 mit einem Aufnahmeabschnitt 248 versehen. In dem Aufnahmeabschnitt 248 ist beispielhaft das Dämpfungselement 260 aufgenommen, sowie zumindest abschnittweise die Anschlaghülse 242. Bevorzugt greift zumindest der Eingriffsabschnitt 226 der Verriegelungshülse 220 im Verriegelungszustand der Verriegelungseinrichtung 200 in den Aufnahmeabschnitt 248 ein.

Zum Verriegeln des Einsatzwerkzeugs 190 in der Werkzeugaufnahme 140 wird das Einsatzwerkzeug 190 in Richtung des Schlägers 214 in den Werkzeughalter 210 eingeschoben. Hierbei drückt das Einsatzwerkzeug 190 gegen das in der Ausnehmung 216 angeordnete, mindestens eine Verriegelungselement 250 und verschiebt dieses gegen die federbeaufschlagte Druckhülse 230 und daraufhin mit dieser derart, dass das mindestens eine Verriegelungselement 250 soweit in Richtung des Abschlussflansches 112 aus der Ausnehmung 216 geschoben wird, dass ein dem Schläger 214 zugewandtes Ende des Einsatzwerkzeugs 190 an dem mindestens einen Verriegelungselement 250 vorbeigeschoben wird. Daraufhin drückt die federbeaufschlagte Druckhülse 230 durch die Federkraft des Federelements 280 das mindestens eine Verriegelungselement 250 zurück in die Ausnehmung 216, wo das mindestens eine Verriegelungselement 250 zumindest bereichsweise in den Verriegelungsabschnitt 205 des Einsatzwerkzeugs 190 eingreift und somit das Einsatzwerkzeug 190 im Werkzeughalter 210 verriegelt.

Im Verriegelungszustand der Verriegelungseinrichtung 200 beaufschlagt die federbeaufschlagte Druckhülse 230 durch die Federkraft des Federelements 280 das mindestens eine Verriegelungselement 250 gegen die mindestens eine Anlagefläche 244 der Anschlaghülse 242 sowie in die Ausnehmung 216 des Werkzeughalters 210 zum Verriegeln des Einsatzwerkzeugs 190. Hierbei beaufschlagt die federbeaufschlagte Druckhülse 230 ebenfalls die Verriegelungshülse 220 gegen die Anschlaghülse 242, sodass der Außenkragen 275 der Verriegelungshülse 220 bevorzugt bündig gegen den Aufnahmeabschnitt 248 der Schutzkappe 245 anliegt.

Zum Entriegeln der Verriegelungseinrichtung 200 wird die Verriegelungshülse 220 bevorzugt in der Längsrichtung 203 der Werkzeugaufnahme 140 gegen die federbeaufschlagte Druckhülse 230, und somit mit dieser gegen die Federkraft des Federelements 280 in Richtung der Führungshülse 281 verschoben. Hierbei nimmt die federbeaufschlagte Druckhülse 230 das mindestens eine Verriegelungselement 250 mit, sodass dieses zumindest soweit aus der Ausnehmung 216 des Werkzeughalters 210 herausgeschoben wird, dass es den Verriegelungsabschnitt 205 des Einsatzwerkzeugs 190 und somit das Einsatzwerkzeug 190 freigibt.

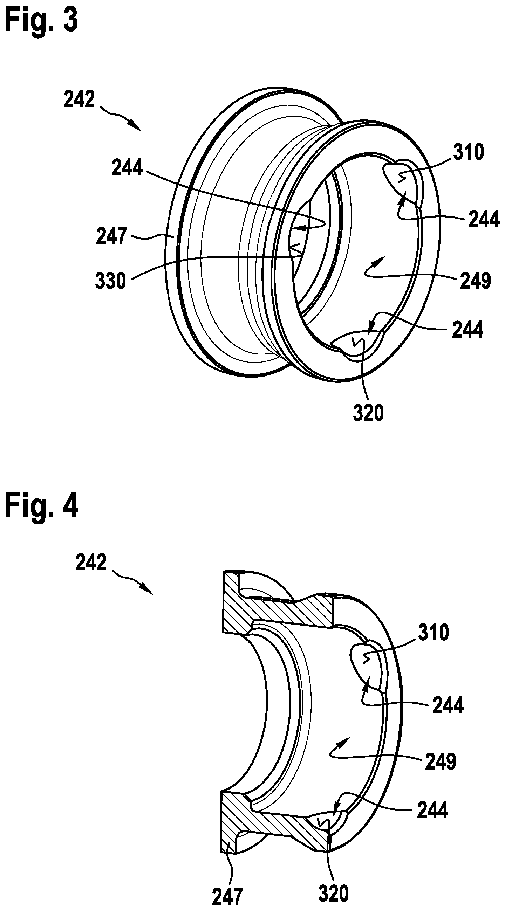

Fig. 3 zeigt die Anschlaghülse 242 der Verriegelungseinrichtung 200 der Werkzeugaufnahme 140 von Fig. 2. Die Anschlaghülse 242 weist illustrativ den Außenkragen 247 sowie drei Anlageflächen 244 an ihrem Innenumfang 249 auf. Die drei Anlageflächen 244 sind zur Verdeutlichung separat mit den Bezugszeichen 310, 320, 330 gekennzeichnet.

Wie bei Fig. 2 beschrieben, finden bevorzugt, aber nicht zwingend, drei Verriegelungselemente Anwendung, denen die drei Anlageflächen 310, 320, 330 zugeordnet sind. Diese sind jeweils an die Außenkontur der Verriegelungselemente angepasst, um einen Flächenkontakt zwischen jeder der Anlageflächen 310, 320, 330 und jedem zugeordneten Verriegelungselement in der Verriegelungsstellung zu ermöglichen.

Die drei Verriegelungselemente wie bei Fig. 2 beschrieben sind als Verriegelungskugeln ausgebildet. Dementsprechend sind die drei Anlageflächen 310, 320, 330 zumindest abschnittsweise sphärisch ausgebildet.

Fig. 4 zeigt die Anschlaghülse 242 von Fig. 3 mit den Anlageflächen 244, von denen hier lediglich die Anlagefläche 310 sowie abschnittsweise die Anlagefläche 320 sichtbar sind. Fig. 4 verdeutlicht die zumindest abschnittsweise sphärische Ausbildung der Anlageflächen 244.

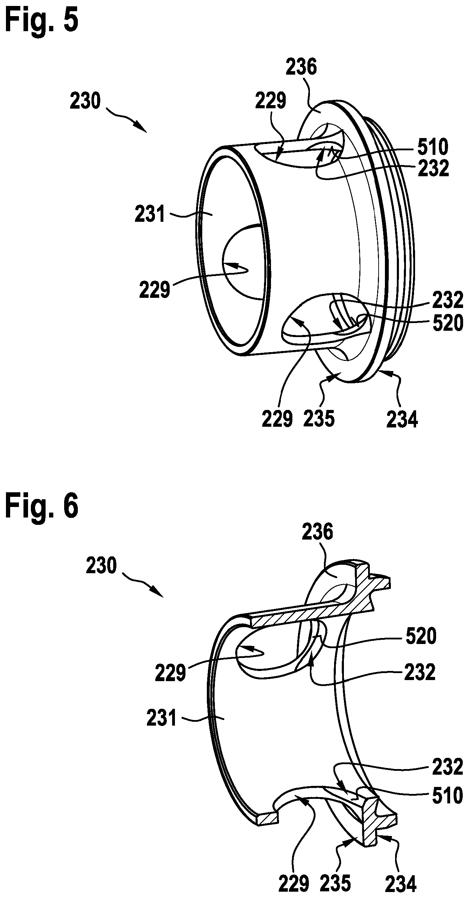

Fig. 5 zeigt die federbeaufschlagte Druckhülse 230 der Verriegelungseinrichtung 200 der Werkzeugaufnahme 140 von Fig. 2. Die federbeaufschlagte Druckhülse 230 weist illustrativ den Beaufschlagungskragen 236 auf, sowie drei Aufnahmen 229, die jeweils eine zugeordnete Druckfläche 232 aufweisen. Dementsprechend sind drei Druckflächen 232 vorhanden, von denen in Fig. 5 jedoch nur zwei sichtbar und zur Verdeutlichung separat mit den Bezugszeichen 510, 520 gekennzeichnet sind.

Wie bei Fig. 2 beschrieben, finden bevorzugt, aber nicht zwingend, drei Verriegelungselemente Anwendung, denen die drei Druckflächen 232 zugeordnet sind. Diese sind bevorzugt jeweils an die Außenkontur der Verriegelungselemente angepasst, um einen Flächenkontakt zwischen jeder der Druckflächen 232 und jedem zugeordneten Verriegelungselement in der Verriegelungsstellung zu ermöglichen.

Die drei Verriegelungselemente wie bei Fig. 2 beschrieben sind als Verriegelungskugeln ausgebildet. Dementsprechend sind die drei Druckflächen 232 zumindest abschnittsweise sphärisch ausgebildet.

Fig. 6 zeigt die federbeaufschlagte Druckhülse 230 von Fig. 5 mit den Druckflächen 232, von denen hier lediglich die Druckfläche 520 sowie abschnittsweise die Druckfläche 510 sichtbar sind. Fig. 6 verdeutlicht die zumindest abschnittsweise sphärische Ausbildung der Druckflächen 232.

## Patentansprüche

1. Handwerkzeugmaschine (100) mit einer Werkzeugaufnahme (140), die einen rohrförmigen Werkzeughalter (210) aufweist, in dem ein Einsatzwerkzeug (190) durch eine zugeordnete Verriegelungseinrichtung (200) über mindestens ein Verriegelungselement (250) verriegelbar ist, wobei die Verriegelungseinrichtung (200) eine über ein zugeordnetes Federelement (280) federbeaufschlagte Druckhülse (230) sowie eine Anschlaghülse (242) aufweist, wobei der rohrförmige Werkzeughalter (210) mindestens eine Ausnehmung (216) aufweist, in der das mindestens eine Verriegelungselement (250) in einer Verriegelungsstellung zumindest abschnittsweise angeordnet ist, und wobei die federbeaufschlagte Druckhülse (230) das mindestens eine Verriegelungselement (250) in der Verriegelungsstellung gegen die Anschlaghülse (242) sowie in die Ausnehmung (216) des Werkzeughalters (210) beaufschlagt, **dadurch gekennzeichnet, dass** die Anschlaghülse (242) an ihrem Innenumfang (249) mindestens eine Anlagefläche (244) aufweist, die an eine Außenkontur (255) des mindestens einen Verriegelungselements (250) angepasst ist, um einen Flächenkontakt zwischen der mindestens einen Anlagefläche (244) und dem mindestens einen Verriegelungselement (250) in der Verriegelungsstellung zu ermöglichen, wobei das mindestens eine Verriegelungselement (250) als Verriegelungskugel ausgebildet ist, und die mindestens eine Anlagefläche (244) zumindest abschnittsweise sphärisch ausgebildet ist.

2. Handwerkzeugmaschine nach Anspruch 1, **dadurch gekennzeichnet, dass** die federbeaufschlagte Druckhülse (230) mindestens eine Aufnahme (229) aufweist, in der das mindestens eine Verriegelungselement (250) aufgenommen ist, wobei der mindestens einen Aufnahme (229) eine Druckfläche (232) zur Kraftbeaufschlagung des mindestens einen Verriegelungselements (250) in der Verriegelungsstellung zugeordnet ist, und wobei die Druckfläche (232) an die Außenkontur (255) des mindestens einen Verriegelungselements (250) angepasst ist, um einen Flächenkontakt zwischen der Druckfläche (232) und dem mindestens einen Verriegelungselement (250) in der Verriegelungsstellung zu ermöglichen.

3. Handwerkzeugmaschine nach Anspruch 2, **dadurch gekennzeichnet, dass** die Druckfläche (232) zumindest abschnittsweise sphärisch ausgebildet ist.

4. Handwerkzeugmaschine nach Anspruch 3, **dadurch gekennzeichnet, dass** die mindestens eine Aufnahme (229) der federbeaufschlagten Druckhülse (230) dazu ausgebildet ist, eine spielbehaftete Aufnahme des mindestens einen Verriegelungselements (250) zu ermöglichen.

5. Handwerkzeugmaschine nach einem der vorhergehenden Ansprüche,
**dadurch gekennzeichnet, dass** die federbeaufschlagte Druckhülse (230) gegen eine Federkraft des zugeordneten Federelements (280) in Längsrichtung (203) des rohrförmigen Werkzeughalters (210) verschiebbar ist, um das mindestens eine Verriegelungselement (250) von der Verriegelungsstellung in eine Entriegelungsstellung zu verschieben.

6. Handwerkzeugmaschine nach Anspruch 5, **dadurch gekennzeichnet, dass** eine Verriegelungshülse (220) vorgesehen ist, die zur Verschiebung der federbeaufschlagten Druckhülse (230) gegen die Federkraft des zugeordneten Federelements (280) in Längsrichtung (203) des rohrförmigen Werkzeughalters (210) verschiebbar ist.

7. Handwerkzeugmaschine nach Anspruch 6, **dadurch gekennzeichnet, dass** die Verriegelungshülse (220) einen Beaufschlagungsabschnitt (223) aufweist, der bei einer Verschiebung der Verriegelungshülse (220) in Längsrichtung (203) gegen die federbeaufschlagte Druckhülse (230) die federbeaufschlagte Druckhülse (230) gegen die Federkraft des zugeordneten Federelements (280) verschiebt.

8. Handwerkzeugmaschine nach Anspruch 6 oder 7, **dadurch gekennzeichnet, dass** die Verriegelungshülse (220) einen nutförmigen Griffbereich (224) aufweist.

9. Handwerkzeugmaschine nach einem der vorhergehenden Ansprüche, die nach Art eines Bohr- oder Meißelhammers ausgebildet ist, wobei der rohrförmige Werkzeughalter (210) ein Hammerrohr (211) aufweist.

## Claims

1. Hand-held machine tool (100) with a tool receptacle (140) having a tubular tool holder (210) in which an insert tool (190) is able to be locked by an assigned locking device (200) by way of at least one locking element (250), wherein the locking device (200) has a thrust sleeve (230), which is spring-loaded by way of an assigned spring element (280), and a detent sleeve (242), wherein the tubular tool holder (210) has at least one clearance (216) in which the at least one locking element (250) is at least in portions disposed in a locked position, and wherein the spring-loaded thrust sleeve (230) impinges the at least one locking element (250) in the locked position against the detent sleeve (242) and into the clearance (216) of the tool holder (210), **characterized in that** the detent sleeve (242) has on its internal circumference (249) at least one detent face (244) which is adapted to an external contour (255) of the at least one locking element (250) so as to enable surface contact between the at least one detent face (244) and the at least one locking element (250) in the locked position, wherein the at least one locking element (250) is designed as a locking sphere, and the at least one detent face (244) is at least in portions designed to be spherical.

2. Hand-held machine tool according to Claim 1, **characterized in that** the spring-loaded thrust sleeve (230) has at least one receptacle (229) in which the at least one locking element (250) is received, wherein the at least one receptacle (229) is assigned a thrust face (232) for applying force to the at least one locking element (250) in the locked position, and wherein the thrust face (232) is adapted to the external contour (255) of the at least one locking element (250) so as to allow surface contact between the thrust face (232) and the at least one locking element (250) in the locked position.

3. Hand-held machine tool according to Claim 2, **characterized in that** the thrust face (232) is at least in portions designed to be spherical.

4. Hand-held machine tool according to Claim 3, **characterized in that** the at least one receptacle (229) of the spring-loaded thrust sleeve (230) is designed to allow the at least one locking element (250) to be received with play.

5. Hand-held machine tool according to one of the preceding claims, **characterized in that** the spring-loaded thrust sleeve (230) is displaceable in the longitudinal direction (203) of the tubular tool holder (210), counter to a spring force of the assigned spring element (280), so as to displace the at least one locking element (250) from the locked position to an unlocked position.

6. Hand-held machine tool according to Claim 5, **characterized in that** provided is a locking sleeve (220) which for displacing the spring-loaded thrust sleeve (230) is displaceable in the longitudinal direction (203) of the tubular tool holder (210), counter to the spring force of the assigned spring element (280).

7. Hand-held machine tool according to Claim 6, **characterized in that** the locking sleeve (220) has an impingement portion (223) which, when displacing the locking sleeve (220) in the longitudinal direction (203), counter to the spring-loaded thrust sleeve (230), displaces the spring-loaded thrust sleeve (230) counter to the spring force of the assigned spring element (280).

8. Hand-held machine tool according to Claim 6 or 7, **characterized in that** the locking sleeve (220) has a groove-shaped gripping region (224).

9. Hand-held machine tool according to one of the preceding claims, which is designed in the manner of a hammer drill or chipping hammer, wherein the tubular tool holder (210) has a hammer tube (211).

## Revendications

1. Machine-outil manuelle (100) présentant un logement d'outil (140), qui présente un porte-outil tubulaire (210), dans lequel un outil d'insertion (190) peut être verrouillé par un dispositif de verrouillage (200) associé par l'intermédiaire d'au moins un élément de verrouillage (250), le dispositif de verrouillage (200) présentant un manchon de pression (230) sollicité par ressort par l'intermédiaire d'un élément à ressort (280) associé ainsi qu'un manchon de butée (242), le porte-outil tubulaire (210) présentant au moins un évidement (216), dans lequel ledit au moins un élément de verrouillage (250) est agencé au moins par sections dans une position de verrouillage et le manchon de pression (230) sollicité par ressort sollicitant ledit au moins un élément de verrouillage (250) dans la position de verrouillage contre le manchon de butée (242) ainsi que dans l'évidement (216) du porte-outil (210), **caractérisée en ce que** le manchon de butée (242) présente, sur sa périphérie interne (249), au moins une surface de butée (244) qui est adaptée à un contour externe (255) dudit au moins un élément de verrouillage (250) afin de permettre un contact surfacique entre ladite au moins une surface de butée (244) et ledit au moins un élément de verrouillage (250) dans la position de verrouillage, ledit au moins un élément de verrouillage (250) étant conçu comme une bille de verrouillage et ladite au moins une surface de butée (244) étant conçue, au moins par sections, de manière sphérique.

2. Machine-outil manuelle selon la revendication 1, **caractérisée en ce que** le manchon de pression (230) sollicité par ressort présente au moins un logement (229) dans lequel ledit au moins un élément de verrouillage (250) est logé, une surface de pression (232) pour la sollicitation par une force dudit au moins un élément de verrouillage (250) dans la position de verrouillage étant associée audit au moins un logement (229) et la surface de pression (232) étant adaptée au contour externe (255) dudit au moins un élément de verrouillage (250) afin de permettre un contact surfacique entre la surface de pression (232) et ledit au moins un élément de verrouillage (250) dans la position de verrouillage.

3. Machine-outil manuelle selon la revendication (2), **caractérisée en ce que** la surface de pression (232) est conçue, au moins par sections, de manière sphérique.

4. Machine-outil manuelle selon la revendication 3, **caractérisée en ce que** ledit au moins un logement (229) du manchon de pression (230) sollicité par ressort est conçu pour permettre un logement permettant un jeu dudit au moins un élément de verrouillage (250).

5. Machine-outil manuelle selon l'une des revendications précédentes, **caractérisée en ce que** le manchon de pression (230) sollicité par ressort peut être déplacé contre une force de ressort de l'élément à ressort (280) associé dans la direction longitudinale (203) du porte-outil tubulaire (210) afin de déplacer ledit au moins un élément de verrouillage (250) à partir de la position de verrouillage dans une position de déverrouillage.

6. Machine-outil selon la revendication 5, **caractérisée en ce qu'**un manchon de verrouillage (220) est prévu, qui peut être déplacé dans la direction longitudinale (203) du porte-outil tubulaire (210) pour le déplacement du manchon de pression (230) sollicité par ressort contre la force de ressort de l'élément à ressort (280) associé.

7. Machine-outil manuelle selon la revendication 6, **caractérisée en ce que** le manchon de verrouillage (220) présente une section de sollicitation (223), qui déplace le manchon de pression (230) sollicité par ressort contre la force de ressort de l'élément à ressort (280) associé lors d'un déplacement du manchon de verrouillage (220) dans la direction longitudinale (203) contre le manchon de pression (230) sollicité par ressort.

8. Machine-outil manuelle selon la revendication 6 ou 7, **caractérisée en ce que** le manchon de verrouillage (220) présente une zone de préhension (224) en forme de rainure.

9. Machine-outil manuelle selon l'une des revendications précédentes, qui est conçue selon un type de marteau perforateur ou de marteau burineur, le porte-outil tubulaire (210) présentant un tube de marteau (211).
